# EUROPEAN PATENT APPLICATION

(11) **EP 2 775 405 A1**
(43) Date of publication of application: **10.09.2014**
(21) Application number: 13001082.0
(22) Date of filing: 04.03.2013
(51) Int. Cl.: G06F 17/22

(54) **Preparation of CID Indexes**

(71) Applicant: UBS AG, 8000 Zürich (CH)
(72) Inventor: Watson, Colin, 8006 Zürich (CH); Dansie, Yves, 6340 Baar (CH); Kolek, Henryk, 05-500 Piasczno (PL); Hiestand, Philipp, 8820 Wädenswil (CH)
(74) Representative: Röthinger, Rainer

(57) **Abstract**

An approach for facilitating preparation of client identifying data (CID) indexes is disclosed. In some implementations, a first CID set of a plurality of CID sets may be received. The first CID set may include first data subsets that are respectively associated with clients. A first CID type of a plurality of CID types that corresponds to the first CID set may be determined. One or more indicators may be assigned to each one of the first data subsets based on the first CID type and the respective client associated with the one first data subset. The one or more indicators assigned to the one first data subset may indicate (i) a first flag relating to the respective client and (ii) a first threshold relating to a detection of data that corresponds to the respective client.

## Description

### Field of the Disclosure

The present disclosure relates generally to preparation of client identifying data (CID) indexes.

### Background

Documents or other content items may be scanned to detect content items that include CID, determine the data types of the detected CID, identify the client classifications or risks associated with the detected CID, or provide other information associated with the detected CID. The information from the scan may then be utilized to assess data leakage relating to CID and determine remedial measures to be taken in response to the data leakage. Typical issues relating to such scans may include low coverage (e.g., a high number of undetected CID) and low accuracy (e.g., a high number of false positive hits), which may result in incorrect data leakage assessments as well as inadequate remedial measures.

### Summary

One aspect of the disclosure relates to methods, apparatuses, and/or systems for facilitating preparation of CID indexes. In one implementation, a method may comprise: receiving a first CID set of a plurality of CID sets, wherein the first CID set includes first data subsets that are respectively associated with clients; determining a first CID type of a plurality of CID types that corresponds to the first CID set; and assigning one or more indicators to each one of the first data subsets based on the first CID type and the respective client associated with the one first data subset, wherein the one or more indicators assigned to the one first data subset indicate (i) a first flag relating to the respective client associated with the one first data subset and (ii) a first threshold relating to a detection of data that corresponds to the respective client associated with the one first data subset.

In another implementation, a system may include one or more processors executing one or more computer program modules that cause the system to: receive a first CID set of a plurality of CID sets, wherein the first CID set includes first data subsets that are respectively associated with clients; determine a first CID type of a plurality of CID types that corresponds to the first CID set; and assign one or more indicators to each one of the first data subsets based on the first CID type and the respective client associated with the one first data subset, wherein the one or more indicators assigned to the one first data subset indicate (i) a first flag relating to the respective client associated with the one first data subset and (ii) a first threshold relating to a detection of data that corresponds to the respective client associated with the one first data subset.

These and other features of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### Brief Description of the Drawings

The present disclosure is illustrated by way of example, and not by way of limitation, in the figures of the accompanying drawing and in which like reference numerals refer to similar elements.
FIG. 1 illustrates a diagram of a system capable of facilitating preparation of CID indexes, in accordance with one or more implementations.
FIG. 2 illustrates a diagram of the components of a data preparation platform, in accordance with one or more implementations.
FIGS. 3A and 3B illustrate flowcharts of processes for facilitating preparation of CID indexes, in accordance with one or more implementations.
FIG. 4 illustrates a diagram of operations that may be performed during preparation of CID indexes, in accordance with one or more implementations.
FIGS. 5A and 5B illustrate tables that include masking codes, risk ratings, and flags relating to clients, in accordance with one or more implementations.
FIGS. 6A-6C illustrate diagrams of blocks that represent data relating to data subsets of CID indexes during preparation of the CID indexes, in accordance with one or more implementations.
FIG. 7 illustrates a diagram of a scanning system that incorporates preparation of CID indexes, in accordance with one or more implementations.

### Detailed Description

Examples for facilitating preparation of CID indexes are disclosed. In the following description, for the purposes of explanation, numerous specific details are set forth in order to provide a thorough understanding of the implementations of the invention. It will be appreciated, however, by one skilled in the art that the implementations of the invention may be practiced without these specific details or with an equivalent arrangement. In other instances, well-known structures and devices are shown in block diagram form in order to avoid unnecessarily obscuring the implementations of the invention.

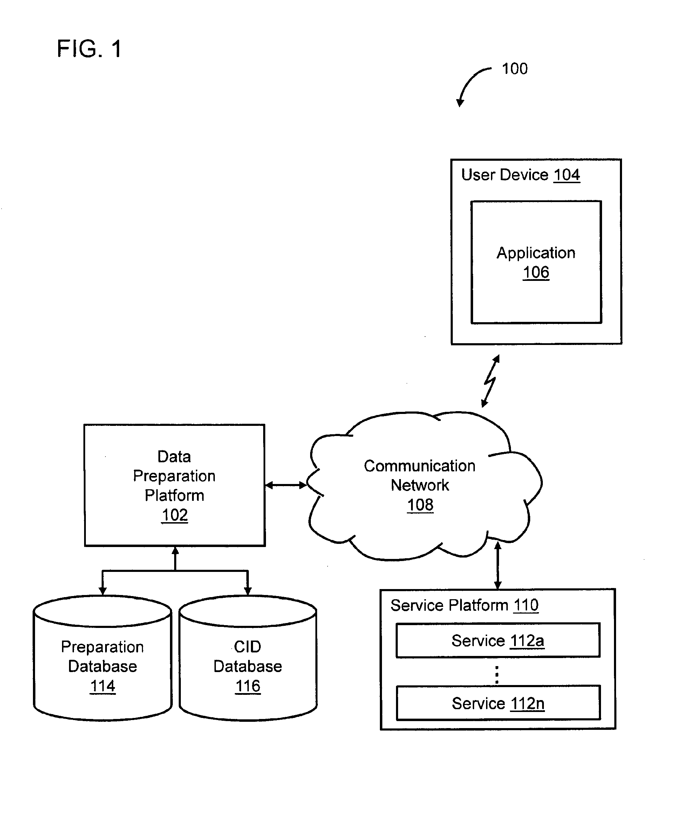

FIG. 1 illustrates a diagram of a system 100 capable of facilitating preparation of CID indexes, in accordance with one or more implementations. It should be noted that although various implementations are described with respect to preparation of CID indexes, it is contemplated that the approaches described herein may be utilized for preparation of other data sets. It should also be noted that although certain implementations are described with respect to preparation of indexes or other data sets for use with unstructured data scanning, it is contemplated that the approaches described herein may extend to scanning of other collections of data, scanning of applications, or other purposes. As discussed, typical issues relating to data-leakage-related scans may include low coverage (e.g., a high number of undetected CID) and low accuracy (e.g., a high number of false positive hits). Among other drawbacks, these issues may lead to incorrect data leakage assessments along with inadequate remedial measures.

To address the above issues, the system 100 may facilitate preparation of indexes that are to be provided for detecting CID in documents or other content items and determining CID-related information during scanning of those documents or other content items. As shown in FIG. 1, the system 100 may include a data preparation platform 102, a user device 104 (or multiple user devices 104) that includes an application 106, a communication network 108, a service platform 110 that includes one or more services 112, a preparation database 114, a CID database 116, and/or other components. It should be noted that the data preparation platform 102 (or various components of the platform 102) may be a separate entity of the system 100, a part of one or more services 112 of the service platform 110, and/or included within the user device 104 (e.g., as part of application 106). As such, in some implementations, the components of the data preparation platform 102 may be executed as one or more components of the separate entity, the one or more services 112, and/or the user device 104.

The data preparation platform 102 may interact with various components of the system 100 to prepare CID indexes. In one implementation, the data preparation platform 102 may receive CID sets (e.g., CID indexes) from one or more sources, such as the CID database 116, the services 112, or other sources. The CID sets may, for instance, be received from the one or more sources via the communication network 108. In some implementations, the preparation database 114 may include mapping information (e.g., to map CID to corresponding clients, to map CID to other CID corresponding to the same client or group of clients, etc.), statistics associated with one or more CID types, masking codes to indicate flags (or other codes) relating to clients, patterns associated with one or more CID types, and/or other information. Such information may, for instance, be utilized by the data preparation platform 102 to determine techniques to be utilized to prepare the CID sets so that the CID sets (e.g., a hashed version of the CID sets) may be provided to facilitate optimal scanning of documents or other content items for CID and CID-related information.

In certain implementation, the data preparation platform 102 may receive a first CID set of a plurality of CID sets. The first CID set may include first data subsets that are respectively associated with clients. The first data subsets may be rows of data, columns of data, or other subsets of data in the first CID set (e.g., rows of data in a CID index, columns of data in a CID index, etc.). The data preparation platform 102 may also determine a first CID type of a plurality of CID types that corresponds to the first CID set. The data preparation platform 102 may further assign one or more indicators to each one of the first data subsets based on the first CID type and the respective client associated with the one first data subset. The one or more indicators assigned to the one first data subset may indicate (i) a first flag relating to the respective client associated with the one first data subset and/or (ii) a first threshold relating to a detection of data that corresponds to the respective client associated with the one first data subset. These assignments may, for instance, be provided in a version of the first CID set.

By way of example, CID types may include type-1, type-2, type-3, and type-4. Type-1 data may include first names, middle names, last names, company names, or physical addresses (e.g., residential, business, postal, etc.). Type-2 data may include international bank account numbers (IBANs), other account numbers, pseudonyms, or mnemonics. Type-3 data may include passport identifications, card identifications, social security numbers, email addresses, stock symbols, or user identifiers. Type-4 data may include phone numbers, fax numbers, customer numbers, safe deposit number, or contract number. Additional or alternative types are contemplated. In one scenario, with respect to the example CID types, Table 1 below may illustrate a representation of at least a portion of the first CID set that may be received by the data preparation platform 102 where the individual rows of data may reflect the first data subsets of the first CID set.

**Table 1**

| | **Name1** | **Name2** | **Name3** | **Name4** |
|---|---|---|---|---|
| 1 | Colin | John | Watson | (Mr) |
| 2 | MR | John | JONES | |
| 3 | Herr. | Hans-Peter | Schmidt | |
| 4 | Jones, | Mrs. | June | |
| 5 | ACLEANING | COMPANY | LTD. | |

As shown, Table 1 includes type-1 data (e.g., names). Thus, as an example, the first CID type that is determined to correspond to the first CID set may be type-1. For each of the illustrated rows, one or more indicators (e.g., a masking code, a match count, etc.) may be assigned based on the first CID set being of type-1 and a respective client associated with the row. Table 2 below may, for instance, represent at least a portion of a resulting data set that is based on the assignment (e.g., along with other processing).

**Table 2**

| | **Name1** | **Name2** | **Name3** | **Masking Code** | **Match Count** |
|---|---|---|---|---|---|
| 1 | COLIN | WATSON | JOHN | 100 | 2 |
| 2 | JOHN | JONES | | 105 | 2 |
| 3 | HANS-PETER | SCHMIDT | | 108 | 2 |
| 4 | HANS | PETER | SCHMIDT | 108 | 3 |
| 5 | JUNE | JONES | | 100 | 2 |
| 6 | ACLEANING | COMPANY | | 120 | 2 |

As noted, one or more indicators assigned to the rows may each indicate a first flag relating to a client associated with the row and a first threshold relating to a detection of data that corresponds to the client. In some implementations, each of the first flags may indicate a classification of a plurality of classifications that corresponds to the client. Each of the first thresholds may indicate a minimum threshold number of matching strings of character (e.g., matching words, string of numbers, etc.) to indicate a detection of data that corresponds to the client (e.g., to accurately indicate whether content items include CID associated with a client during scanning of the content items).

With respect to Table 2, for instance, the one or more indicators for each row may include a masking code and a "match count." The masking code may indicate a flag corresponding to a classification to which a client associated with the respective row is designated. In some implementations, masking codes may be generated through a data masking process, for instance, as additional measure to avoid risk of leaking information. Reports generated during scanning of documents or other content items may utilize such masking codes in lieu of CID. Access to information specifying the meaning of the masking codes (e.g., the flags to which the masking codes refer, the classifications to which the masking codes refer, etc.) may be limited to one or more particular groups of authorized personnel.

The match count may indicate a minimum threshold number of matching words to indicate an accurate detection of data corresponding to the client. For example, the first row of data of Table 2 includes the names "COLIN," "WATSON," and "JOHN," and the match count for the first row is 2. Thus, during a scan of documents or other content items using a hashed index of Table 2, a hit for the client associated with the first row may be determined when words proximately close to each other in a document match at least 2 of the names in the first row. It should be noted the threshold number (e.g., the match count) may be a static number (e.g., 2) or a variable number (e.g., a number that depends on the number of names a row has).

Moreover, as shown by Table 2, the first and fifth rows of data may be assigned the same masking code because the client(s) associated with the first and fifth rows of data may belong to the same classification. On the other hand, the second row may be assigned a masking code different from the first and fifth rows because the client associated with the second row may belong to a classification different from the classification corresponding to the first/fifth row client(s). As such, a flag indicated by the matching code assigned to the second row may be different from a flag indicated by the matching code assigned to the first/fifth row.

As demonstrated by Table 2, in certain implementations, the one or more indicators assigned to the one first data subset (e.g., the respective row) may include a masking code that indicates the first flag relating to the client associated with the one first data subset. In some implementations, the masking code may indicate both the first flag and the first threshold relating to a detection of data that corresponds to the client. For example, Table 3 below may represent at least a portion of a resulting data set that is based on the assignment of the masking code that indicates both the first flag and the first threshold.

**Table 3**

| | **Name1** | **Name2** | **Name3** | **Masking Code** |
|---|---|---|---|---|
| 1 | COLIN | WATSON | JOHN | 100 |
| 2 | JOHN | JONES | | 105 |
| 3 | HANS-PETER | SCHMIDT | | 108 |
| 4 | HANS | PETER | SCHMIDT | 108 |
| 5 | JUNE | JONES | | 100 |
| 6 | ACLEANING | COMPANY | | 120 |

With respect to Table 3, for instance, the third and fourth rows may both correspond to the same individual. Thus, the third and fourth rows may be assigned the same masking code (e.g., code 108) because those rows may correspond to the same client or otherwise the same classification. In addition, in one use case, the masking code may indicate the same variable threshold number of matching words to indicate an accurate detection of data corresponding to the client associated with those rows. It should be noted, however, that although the variable threshold number may be the same, the actual number of words that have to match for each of those rows may be different. For example, the variable threshold number for the third and fourth rows may be a number X that depends on the total number of names in the respective row. The third row includes two names (e.g., "HANS-PETER" and SCHMIDT") and the fourth row includes three names (e.g., "HANS," "PETER," and "SCHMIDT"). Thus, during a scan of documents or other content items using a hashed index of Table 3, a hit based on the third row may be determined when words proximately close to each other in a document match both names of the third row. Moreover, a hit based on the fourth row may be determined when words proximately close to each other in a document match all three names of the fourth row.

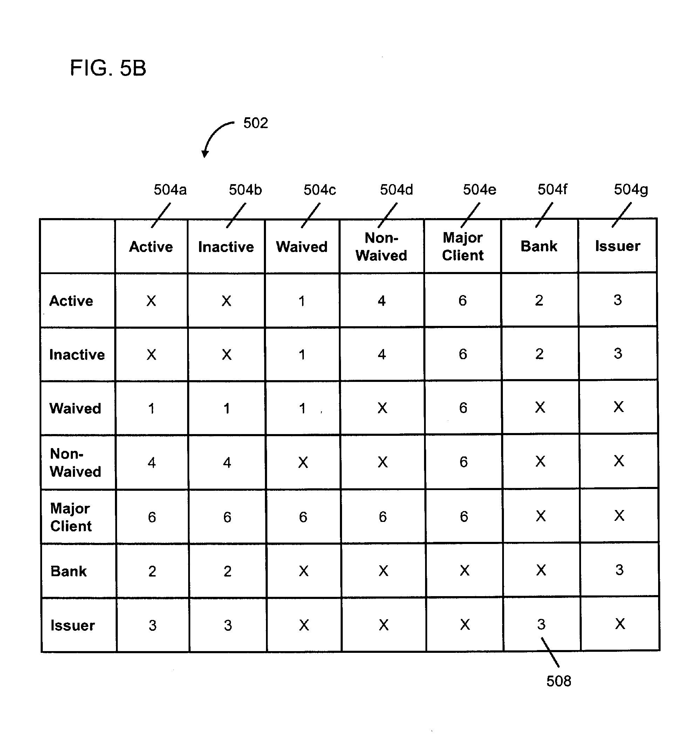

In certain implementations, the plurality of classifications may correspond to a plurality of different risk ratings. The classification indicated by the first flag via the one or more indicators assigned to each one of the data subsets may correspond to a risk rating (of the plurality of different risk ratings) for the respective client associated with the one first data subset. Further details with respect to the risk ratings are described below (e.g., FIG. 5B).

In another implementation, the data preparation platform 102 may determine a group of characters in one or more of the first data subsets that includes a character to be removed. The data preparation platform 102 may also remove the character from the group of characters in the one or more of the first data subsets. The data preparation platform 102 may further provide a new first data subset that includes a group of characters such that the group of characters in the new first data subset includes the removed character and represents the group of characters in the one or more of the first data subsets. In this way, for instance, different variations of character strings may be reflected in a resulting prepared CID set to provide high coverage (e.g., a low number of undetected CID) without necessarily sacrificing accuracy of the CID detection. To avoid excessive variations that could slow down the CID detection, the supplementing of the new first data subset may be based on one or more statistics for the first CID type corresponding to the first CID set. These statistics may, for instance, specify grammar, common usage, or other rules to determine if removed words, phrases, or other character strings should nonetheless be provided in the resulting prepared CID set.

By way of example, Table 4 below represents at least a portion of a resulting data set that is based on character removal from a data subset and an addition of a new data subset (e.g., along with other processing). In one use case, as indicated in Table 1 above, a CID set may initially include a data subset with the names "Herr.," "Hans-Peter," and "Schmidt." During processing of a version of the CID set, one or more statistics may be retrieved based on the CID type (e.g., relating to names) determined for the CID set. These statistics may, for instance, be utilized to identify the stop words or characters that are to be removed from data subsets that correspond to the CID type. When the identified stop words or characters are removed from the data subset, the data subset may include the names "HANS," "PETER," and "SCHMIDT." A new data subset that includes the names "HANS-PETER" and "SCHMIDT" may be provided to a version of the CID set such that that version of the CID set includes both the data subset and the new data subset (e.g., the third and fourth rows of Table 4).

**Table 4**

| | **Name1** | **Name2** | **Name3** |
|---|---|---|---|
| 1 | COLIN | WATSON | JOHN |
| 2 | JOHN | JONES | |
| 3 | HANS-PETER | SCHMIDT | |
| 4 | HANS | PETER | SCHMIDT |
| 5 | JUNE | JONES | |
| 6 | ACLEANING | COMPANY | |

In another implementation, the data preparation platform 102 may reorder, for one or more of the first data subsets, groups of characters in their respective first data subsets based on the first CID type determined for the first CID set. For example, the data preparation platform 102 may retrieve one or more statistics relating to the common orders of words, phrases, or other character strings for data of the first CID type. These statistics may then be utilized to designate an order number to each of the character strings in each of the first data subsets. The reordering may thereafter be based on the designated order numbers such that a first character string having a lower order number than a second character string in the same data subset will be placed before the second character string in that data subset (e.g., strings designated with "1" may be placed before strings designated with "2").

In another implementation, the data preparation platform 102 may receive a second CID set of the plurality of CID sets that includes second data subsets respectively associated with the clients. The second data subsets may be rows of data, columns of data, or other subsets of data in the second CID set (e.g., rows of data in a CID index, columns of data in a CID index, etc.). The data preparation platform 102 may also determine a second CID type of the plurality of CID types that corresponds to the second CID set and that is different from the first CID type (corresponding to the first CID set). The data preparation platform 102 may further assign one or more indicators to each one of the second data subsets based on the second CID type and the respective client associated with the one second data subset. The one or more indicators assigned to the one second data subset may indicate (i) a second flag relating to the respective client associated with the one second data subset and (ii) a second threshold relating to a detection of data that corresponds to the respective client associated with the one second data subset. These assignments may, for instance, be provided in a version of the second CID set.

In one scenario, with respect to example CID types 1-4, Table 5 below may illustrate a representation of at least a portion of the second CID set that may be received by the data preparation platform 102 where the individual rows of data may reflect the second data subsets of the second CID set.

**Table 5**

| | **IBAN** |
|---|---|
| 1 | GB82 WEST 1234 5698 7654 32 |
| 2 | CH21AAAA12345678765456 |
| 3 | CH21:ABCD:123456787654-11 |

Based on example CID types 1-4, Table 1 may include type-1 data (e.g., names), and Table 5 may include type-2 data (e.g., IBANs). As an example, the second CID type that is determined to correspond to the second CID set may be type-2. For each of the illustrated rows, one or more indicators (e.g., a masking code, a match count, etc.) may be assigned based on the second CID set being of type-2 and a respective client associated with the row.

In another implementation, the data preparation platform 102 may hash a version of the first CID set that includes the one or more indicators assigned to the first data subsets to generate a first hashed index associated with the first CID set. The data preparation platform 102 may also hash a version of the second CID set that includes the one or more indicators assigned to the second data subsets to generate a second hashed index associated with the second CID set. The generation of the first hashed index and the second hashed index may be such that the second hashed index is different from the first hashed index. In certain implementations, separate hashed indexes may be generated for CID sets of each CID type. In this way, scanning of documents or other content items may be performed separately for CID of each CID type. Because CID of different CID types may be associated with different sensitivities, risks, remedial measures upon leakage, etc., it may be beneficial to independently or separately perform scanning for CID of different CID types. In some implementations, a set of combined hashed indexes may be generated for CID of combined CID types. In some instances, the use of the combined hashed indexes may allow for the searching of CID of those CID types more efficiently.

In another implementation, the data preparation platform 102 may determine first and second patterns of a plurality of patterns associated with the second CID type. The first pattern and the second pattern may be different patterns. The data preparation platform 102 may also provide a first version of at least one of the second data subsets based on the first pattern. The data preparation platform 102 may further provide a second version of the at least one of the second data subsets based on the second pattern. These versions of the data subsets may, for instance, be provided in a version of the second CID set.

By way of example, Table 6 below may represent one or more patterns associated with the second CID type (e.g., IBANs). Such patterns may, for instance, be retrieved from a pattern repository (e.g., preparation database 114 or other database) that stores patterns for one or more CID types. Table 7 below may represent at least a portion of a resulting data set that includes data subsets based on patterns associated with the second CID type (e.g., based on patterns of Table 6).

**Table 6**

| | **IBAN** |
|---|---|
| 1 | AANNAAAANNNNNNNNNNNNNN |
| 2 | AANN:AAAA:NNNNNNNNNNNN-NN |
| 3 | AANN AAAA NNNN NNNN NNNN NN |

**Table 7**

| | **IBAN** |
|---|---|
| 1 | GB82WEST12345698765432 |
| 2 | CH21AAAA12345678765456 |
| 3 | CH21ABCD12345678765411 |
| 4 | GB82:WEST: 123456987654-32 |
| 5 | CH21:AAAA:123456787654-56 |
| 6 | CH21:ABCD:123456787654-11 |
| 7 | GB82 WEST 1234 5698 7654 32 |
| 8 | CH21 AAAA 1234 5678 7654 56 |
| 9 | CH21 ABCD 1234 5678 7654 11 |

As shown, rows 1-3 of Table 7 may be based on the pattern of row 1 of Table 6, rows 4-6 of Table 7 may be based on the pattern of row 2 of Table 6, and rows 7-9 of Table 7 may be based on the pattern of row 3 of Table 6. In this way, different pattern variations reflecting the same CID may be provided in a resulting prepared CID set to provide high coverage (e.g., a low number of undetected CID) without necessarily sacrificing accuracy of the CID detection. To avoid excessive variations that could slow down the CID detection, the patterns may selected based on one or more statistics for the second CID type corresponding to the second CID set. These statistics may, for instance, specify grammar, common usage, or other rules to determine which patterns should be selected (e.g., selecting the most frequently utilized patterns indicated by the statistics for data of the particular CID type).

The communication network 108 of system 100 may include one or more networks such as a data network, a wireless network, a telephony network, and/or other communication networks. It is contemplated that the data network may be any local area network (LAN), metropolitan area network (MAN), wide area network (WAN), a public data network (e.g., the Internet), short range wireless network, and/or any other suitable packet-switched network. The wireless network may, for example, be a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium (e.g., worldwide interoperability for microwave access (Wi-MAX), Long Term Evolution (LTE) networks, code division multiple access (CDMA), wideband code division multiple access (WCDMA), wireless fidelity (WiFi), wireless LAN (WLAN), Bluetooth, Internet Protocol (IP) data casting, satellite, mobile ad-hoc network (MANET), etc.).

The user device 104 may be any type of mobile terminal, fixed terminal, and/or other device. For example, the user device 104 may include a desktop computer, a notebook computer, a netbook computer, a tablet computer, a smartphone, a navigation device, an electronic book device, a gaming device, a point-of-sale (POS) device, an automated teller machine (ATM), and/or any other user device. In some implementations, the user device 104 may be the accessories and peripherals of these devices. It is also contemplated that the user device 104 may support any type of interface to the user (such as "wearable" circuitry, etc.).

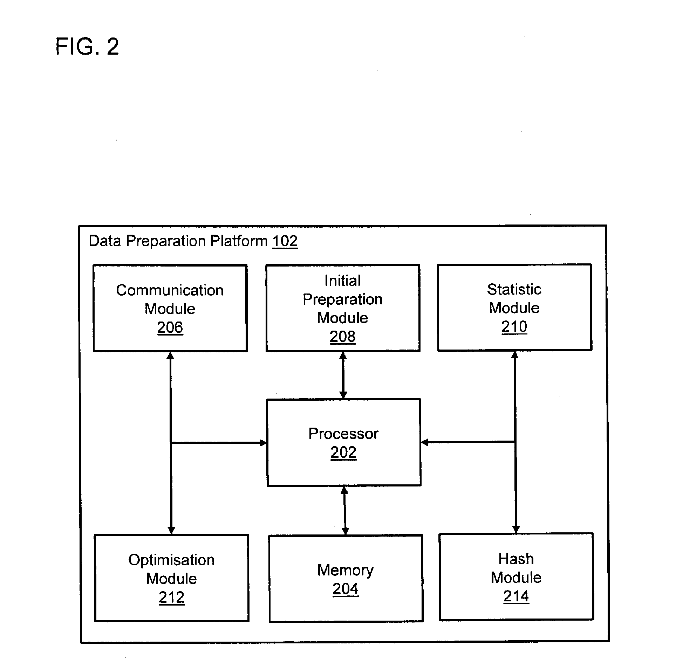

FIG. 2 illustrates a diagram of the components of the data preparation platform 102, in accordance with one or more implementations. By way of example, the data preparation platform 102 may include one or more components for facilitating preparation of CID indexes. It is contemplated that the operations of these components may be combined in one or more components or performed by other components of equivalent functionality. In one implementation, the data preparation platform 102 may include a processor 202, memory 204, a communication module 206, an initial preparation module 208, a statistic module 210, an optimisation module 212, a hash module 214, or other components.

The processor 202 may execute at least one algorithm for executing operations of the data preparation platform 102. For example, in certain implementations, the processor 302 may work with the communication module 206 to facilitate communication with other components of the data preparation platform 102, communication among the other components of the data preparation platform 102, or communication with devices external to the data preparation platform 102 (e.g., the user device 104, the databases 114 and 116, the service platform 110, etc.). In one use case, for instance, the communication module 206 may be utilized to receive CID sets from one or more sources. In another use case, a resulting prepared CID set (or a hashed version) may be provided via the communication module 206 as an output which can be utilized for scanning documents or other content items.

In some implementations, the processor 202 may interact with the initial preparation module 208 to determine techniques to be utilized for preparing a received CID set. In one use case, for instance, a splitting-based technique may be one technique used for names and addresses (e.g., splitting a string into multiple strings), an exact data match (EDM) pattern calibration technique may be one technique used for certain identifiers, and an integer-based technique may be one technique used for telephone numbers or other integers. In another use case, other techniques may be determined for preparing the received CID set. These techniques may include a cleaning operation, a reordering operating, a supplementing operation, a pattern application operation, a hash operation, or other operations.

By way of example, the initial preparation module 208 may utilize mapping information from the preparation database 114 to determine the CID type for the received CID set, clients associated with data subsets of the received CID set, or other information associated with the received CID set. The CID type may, for instance, be utilized to retrieve statistics relating to the CID type (e.g., grammar, common usage, or other rules relating to the CID type) from the preparation database 114. The initially preparation module 208 may determine the techniques (e.g., a specific operation, parameters for the operation, etc.) for preparing the received CID set based on the CID type and the retrieved statistics. The initial preparation module 208 may perform one or more operations that relate to preparation of the received CID set based on the determination of the techniques or inform other modules of the operations that are to be performed with respect to preparation of the received CID set.

In certain implementations, the initial preparation module 208 may perform a cleaning operation to remove characters from data subsets of the received CID set that are not optimal for scanning, to format the data subsets of the received CID set, etc. The character removal may, for instance, include removing one or more stop characters. The formatting may include normalizing characters of the data subsets, splitting data in each of the data subsets into one or more multiple portions, etc.

In various implementations, statistic module 210 and the optimisation module 212 may work together to perform one or more of the determined operations. In one scenario, the statistic module 210 may provide the statistics (e.g., from the preparation database 114) as parameters to the optimisation module 212 to identity and remove words or other character strings such as character strings identified by the statistics as stop words.

In another scenario, the optimisation module 212 may utilize the statistics to supplement one or more modified data subsets of the received CID set with additional data subsets that include words or other character strings that were previously modified or removed from the one or more data subsets. For example, during a cleaning or other operation, a character string "HANS-PETER" in a data subset may be split such that the data subset includes two character strings "HANS" and "PETER" in lieu of the single character string. Based on the statistics, it may be determined that "HANS-PETER" is a commonly used construction. As such, the optimisation module 212 may supplement a version of the received CID set with an additional data subset that includes the character string "HANS-PETER" that corresponds to the modified data subset having the two character strings "HANS" and "PETER."

In yet another scenario, the optimisation module 212 may utilize the statistics to reorder words or other character strings in data subsets of the received CID set. The statistic module 210 may, for instance, utilize the statistics to designate an order number to each of the character strings in the data subsets. The reordering may thereafter be based on the designated order numbers such that a first character string having a lower order number than a second character string in the same data subset will be placed before the second character string in that data subset (e.g., strings designated with "1" may be placed before strings designated with "2").

In a further scenario, the statistic module 210 and the optimisation module 212 may be utilized to assign one or more indicators to individual ones of data subsets of the received CID type based on the CID type and a client associated with a respective data subset. The one or more indicators assigned to each of the data subsets may, for instance, indicate (i) a flag relating to the respective client and (ii) a threshold relating to a detection of data that corresponds to the respective client. As noted, in certain implementations, the one or more indicators assigned to a data subset may include a masking code that indicates the flag relating to the respective client. In some implementations, the masking code may indicate the flag relating to the respective client and the first threshold relating to a detection of data that corresponds to the respective client. The flag may, for instance, indicate a classification of a plurality of classifications that corresponds to the respective client. In various implementations, the plurality of classifications may correspond to a plurality of different risk ratings such that the classification may correspond to a risk rating (of the plurality of different risk ratings) for the respective client.

In some implementations, the hash module 214 may hash a version of the received CID set that includes the masking codes assigned to the data subsets to generate a hashed index associated with the received CID set. The hashed index may be outputted along with policies, rules, or conditions for utilizing the hashed index during scanning of documents or other content items for CID or CID-related information.

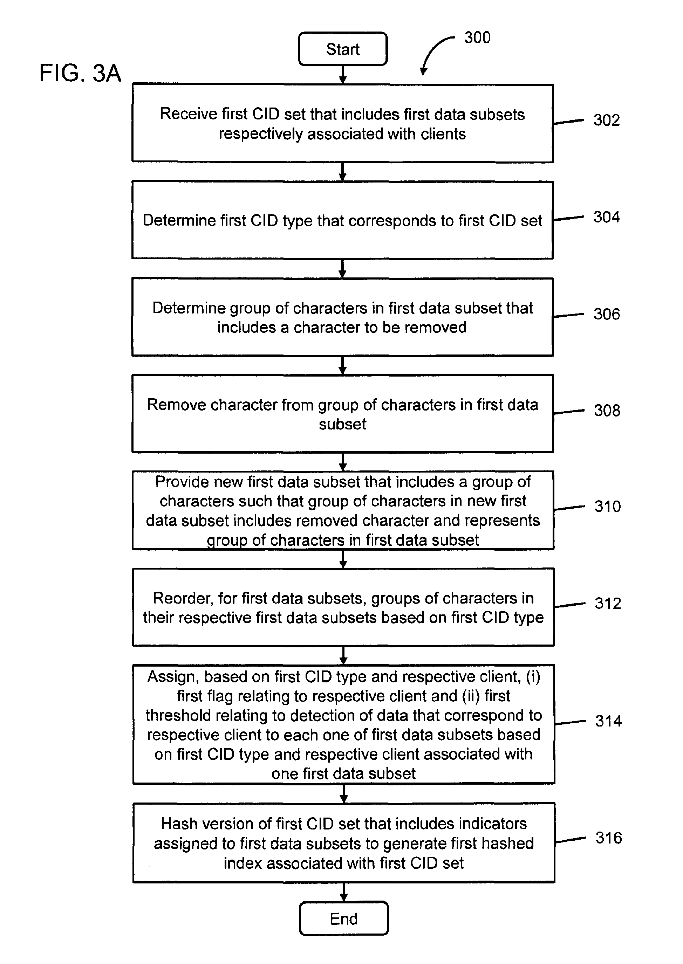

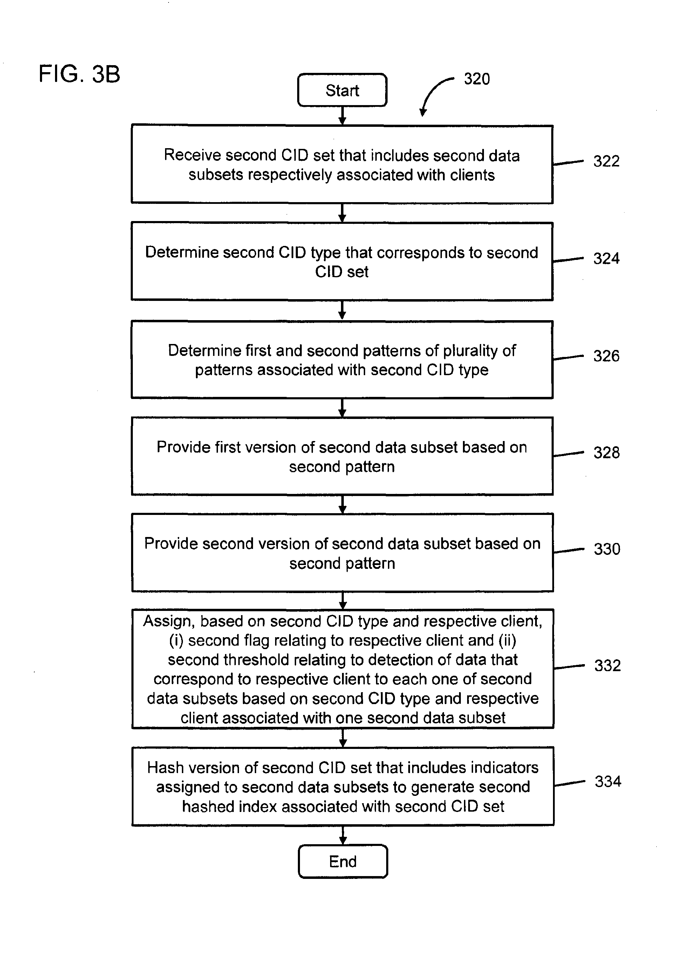

FIGS. 3A and 3B illustrate flowcharts of processes 300 and 320 for facilitating preparation of CID indexes, in accordance with one or more implementations. With respect to FIG. 3A, the operations of process 300 presented below are intended to be illustrative. In some implementations, process 300 may be accomplished with one or more additional operations not described, and/or without one or more of the operations discussed. Additionally, the order in which the operations of process 300 are illustrated in FIG. 3A and described below is not intended to be limiting.

At an operation 302, a first CID set of a plurality of CID sets may be received. The first CID set may include first data subsets that are respectively associated with clients. Operation 302 may be performed by a communication module that is the same as or similar to communication module 206, in accordance with one or more implementations.

At an operation 304, a first CID type of a plurality of CID types that corresponds to the first CID set may be determined. CID in the first data subsets may, for instance, correspond to the first CID type. Operation 304 may be performed by an initial preparation module that is the same as or similar to initial preparation module 208, in accordance with one or more implementations.

At an operation 306, a group of characters in one or more of the first data subsets that includes a character to be removed may be determined. Operation 306 may be performed by an initial preparation module or an optimisation module that are the same as or similar to initial preparation module 208 or optimisation module 212, in accordance with one or more implementations.

At an operation 308, the character may be removed from the group of characters in the one or more of the first data subsets. Operation 308 may be performed by an initial preparation module or an optimisation module that are the same as or similar to initial preparation module 208 or optimisation module 212, in accordance with one or more implementations.

At an operation 310, a new first data subset that includes a group of characters may be provided such that the group of characters in the new first data subset includes the removed character and represents the group of characters in the one or more of the first data subsets. Operation 310 may be performed by an optimisation module that is the same as or similar to optimisation module 212, in accordance with one or more implementations.

At an operation 312, groups of characters may be reordered in their respective first data subsets based on the first CID type. Such reordering may be facilitated for one or more of the first data subsets. Operation 312 may be performed by an optimisation module that is the same as or similar to optimisation module 212, in accordance with one or more implementations.

At an operation 314, one or more indicators may be assigned to each one of the first data subsets based on the first CID type and the respective client associated with the one first data subset. The one or more indicators assigned to the one first data subset may indicate (i) a first flag relating to the respective client associated with the one first data subset and (ii) a first threshold relating to a detection of data that corresponds to the respective client associated with the one first data subset. As discussed, in certain implementations, the one or more indicators assigned to the one first data subset may include a masking code that indicates the first flag relating to the respective client. In some implementations, the masking code may indicate the first flag relating to the respective client and the first threshold relating to a detection of data that corresponds to the respective client. The first flag may, for instance, indicate a classification of a plurality of classifications that corresponds to the respective client. In various implementations, the plurality of classifications may correspond to a plurality of different risk ratings such that the classification may correspond to a risk rating (of the plurality of different risk ratings) for the respective client. Operation 314 may be performed by an optimisation module that is the same as or similar to optimisation module 212, in accordance with one or more implementations.

At an operation 316, a version of the first CID set that includes the one or more indicators assigned to the first data subsets may be hashed to generate a first hashed index associated with the first CID set. As noted, in some implementations, the first hashed index may be utilized during scanning of documents or other content items to detect CID or determine CID-related information. In one use case, for instance, the first hashed index may be utilized to detect CID of the first CID type corresponding to the first CID set. Operation 316 may be performed by a hash module that is the same as or similar to hash module 214, in accordance with one or more implementations.

With respect to FIG. 3B, the operations of process 320 presented below are intended to be illustrative. In some implementations, process 320 may be accomplished with one or more additional operations not described, and/or without one or more of the operations discussed. Additionally, the order in which the operations of process 320 are illustrated in FIG. 3B and described below is not intended to be limiting.

At an operation 322, a second CID set of the plurality of CID sets may be received. As such, the plurality of CID sets may include the first CID set and the second CID set. The second CID set may include second data subsets that are respectively associated with the clients. Operation 322 may be performed by a communication module that is the same as or similar to communication module 206, in accordance with one or more implementations.

At an operation 324, a second CID type of the plurality of CID types that corresponds to the second CID set may be determined. Thus, the plurality of CID types may include the first CID type and the second CID type. CID in the second data subsets may, for instance, correspond to the second CID type. Operation 324 may be performed by an initial preparation module that is the same as or similar to initial preparation module 208, in accordance with one or more implementations.

At an operation 326, first and second patterns of a plurality of patterns associated with the second CID type may be determined. The first pattern may be different from the second pattern. As discussed, in some implementations, the first and second patterns may be selected for application of those patterns on the second data subsets based on the second CID type. For example, these patterns may be retrieved from a pattern repository based on a request for patterns corresponding to the second CID type. Operation 326 may be performed by an optimisation module that is the same as or similar to optimisation module 212, in accordance with one or more implementations.

At an operation 328, a first version of at least one of the second data subsets may be provided based on the first pattern. Operation 328 may be performed by an optimisation module that is the same as or similar to optimisation module 212, in accordance with one or more implementations.

At an operation 330, a second version of the at least one of the second data subsets may be provided based on the second pattern. Thus, a version of the CID set may include second data subsets that are based on the first pattern and second data subsets that are based on the second pattern. Operation 330 may be performed by an optimisation module that is the same as or similar to optimisation module 212, in accordance with one or more implementations.

At an operation 332, one or more indicators may be assigned to each one of the second data subsets based on the second CID type and the respective client associated with the one second data subset. The one or more indicators assigned to the one second data subset may indicate (i) a second flag relating to the respective client associated with the one second data subset and (ii) a second threshold relating to a detection of data that corresponds to the respective client associated with the one second data subset. As discussed, in certain implementations, the one or more indicators assigned to the one second data subset may include a masking code that indicates the second flag relating to the respective client. In some implementations, the masking code may indicate the second flag relating to the respective client and the second threshold relating to a detection of data that corresponds to the respective client. The second flag may, for instance, indicate a classification of a plurality of classifications that corresponds to the respective client. In various implementations, the plurality of classifications may correspond to a plurality of different risk ratings such that the classification may correspond to a risk rating (of the plurality of different risk ratings) for the respective client. Operation 332 may be performed by an optimisation module that is the same as or similar to optimisation module 212, in accordance with one or more implementations.

At an operation 334, a version of the second CID set that includes the one or more indicators assigned to the second data subsets may be hashed to generate a second hashed index associated with the second CID set. The second hashed index may be different from the first hashed index associated with the first CID set. As noted, in some implementations, the first hashed index and the second hashed index may be utilized during scanning of documents or other content items to detect CID or determine CID-related information. In one use case, for instance, the first hashed index may be utilized to detect CID of the first CID type corresponding to the first CID set. The second hashed index may be utilized to detect CID of the second CID type corresponding to the second CID set. Operation 334 may be performed by a hash module that is the same as or similar to hash module 214, in accordance with one or more implementations.

Referring to FIGS. 3A and 3B, in certain implementations, one or more operations of processes 300 or 320 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of processes 300 or 320 in response to instructions stored electronically on an electronic storage medium. The one or more processing devices may include one or more devices configured through hardware, firmware, and/or software to be specifically designed for execution of one or more of the operations of processes 300 or 320.

It should be noted that although FIG. 3A illustrates implementation of operations 302-316 on the first CID set (which includes CID of the first CID type), it is contemplated that in some implementations one or more of these operations may also be implemented for the second CID set (which includes CID of the second CID type) or other CID sets corresponding to other CID types. It should also be noted that although FIG. 3B illustrates implementation of operations 322-334 on the second CID set (which includes CID of the second CID type), it is contemplated that in some implementations one or more of these operations may be implemented for the first CID set (which includes CID of the first CID type) or other CID sets corresponding to other CID types.

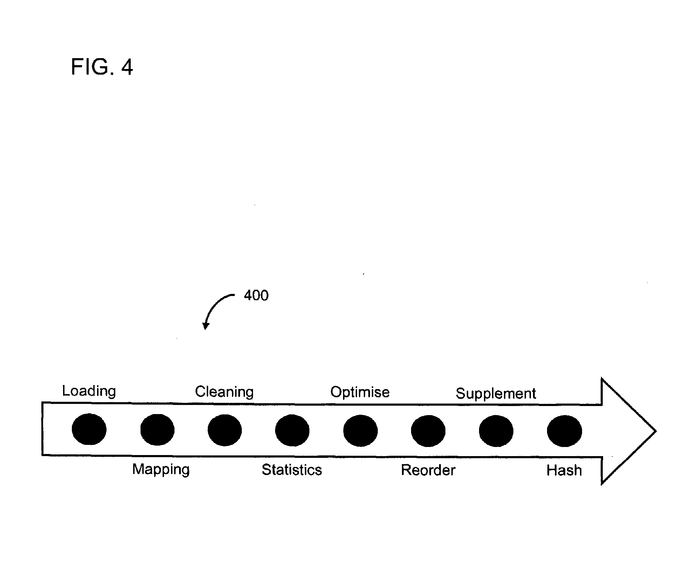

FIG. 4 illustrates a diagram 400 of operations that may be performed during preparation of CID indexes, in accordance with one or more implementations. The operations in diagram 400 are intended to be illustrative. In some implementations, preparation of CID indexes may be accomplished with one or more additional operations not described, and/or without one or more of the operations discussed. Additionally, the order in which the operations are illustrated in diagram 400 and described below is not intended to be limiting.

As depicted in FIG. 4, such operations may include operations relating to loading, mapping, cleaning, statistics, optimisation, reordering, supplementation, or hashing. These operations may, for instance, facilitate preparation of data for use with EDM scanning. During loading, CID and non-CID may be received from configured data feeds and loaded into a database for processing.

During mapping, initial preparation may be performed to determine data types of the data to be processed (e.g., CID types, non-CID types, etc.), various techniques to use to prepare the data for optimal scanning, to determine masking codes for flags, or other information relating to preparation of the data for use with scanning of documents or other content items for client-related information. Cleaning may include removing characters that are not optimal for use with the scanning process, formatting the data, or other cleaning-related operations. Formatting the data may include normalizing the data, splitting data portions into one or more multiple portions, etc.

Operations related to statistics may include determining statistics to be applied for data sets of the loaded data. These statistics may, for instance, be determined on-the-fly or retrieved from one or more sources (e.g., preparation database 114) based on the various data types corresponding to the loaded data. In some implementations, the various statistics may be applied with respect to data sets of the loaded data in accordance with their respective data types.

By way of example, during optimisation, the statistics may be utilized along with preparation techniques (e.g., determined during mapping) to determine portions of the data (e.g., words or other character strings) that should remain in the resulting prepared version of the data that will be used as an index during scanning of documents or other content items. In addition, optimisation may include using the statistics to determine a number of matches that is required to determine a "hit" during scanning. In one use case, for instance, such a determination may be performed for data subsets of CID sets that were received during loading (e.g., as shown in Table 2 above).

Optimisation may include reordering, supplementation, or other optimisation-related operations. In one scenario, a particular CID set that is received during loading may include data subsets that individually contain CID associated with respective clients. Prior to reordering, statistics relating to the common orders of words, phrases, or other character strings may be determined for data of a CID type corresponding to the CID set. These statistics may then be utilized to designate an order number to each of the character strings in each data subsets of the CID set. The reordering may thereafter be performed based on the designated order numbers. In another scenario, certain data (e.g., certain character strings) that were previously removed from data subsets during processing of the CID set may be supplemented back in the CID set to improve coverage of CID detection.

During hashing, resulting versions of data sets (e.g., CID sets) that were received during loading may each be hashed to generate hashed indexes corresponding to each of the data sets. The hashed indexes may be outputted along with policies, rules, or conditions for utilizing the hashed indexes during scanning of documents or other content items to detect client-related information.

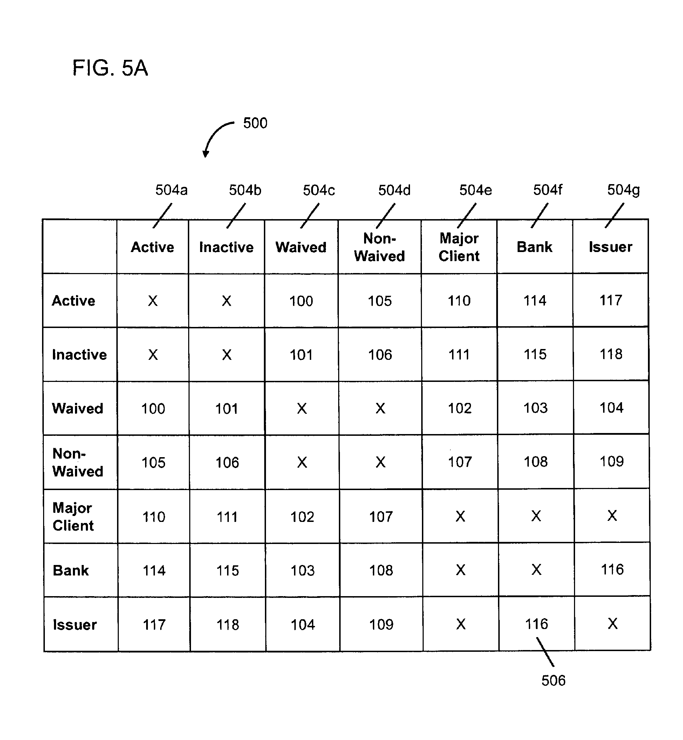

FIGS. 5A and 5B illustrate tables 500 and 502 that include masking codes, risk ratings, and flags relating to clients, in accordance with one or more implementations. For example, with respect to FIG. 5A, table 500 includes flags 504 indicating classifications associated with clients and masking codes 506 that correspond to combinations of flags 504. As noted, in some implementations, the masking codes 506 may be generated to mask the classifications that are utilized for the clients. These masking codes 506 may then be provided to one or more particular groups of authorized personnel so that others may not be aware of the classifications that are utilized. In one use case, for instance, reports generated from a scan of documents or other content items may include the masking codes 506 in lieu of known flags or classifications.

With respect to FIG. 5B, table 502 includes flags 504 and risk ratings 508 that correspond to combinations of flags 504. These risk ratings 508 may, for instance, be utilized to drive the categories in reports generated from scanning of documents or other content items for CID detection. As such, remediation may be driven by the sensitivities or risk ratings of the data. In one use case, for instance, detection of CID of a non-waived client may raise a high alert for attention. Detection of CID of a major client may result in isolation of the document in which the CID is detected. Detection of CID of an issuer or bank may raise an alert if there are at least five detections of CID in the same document.

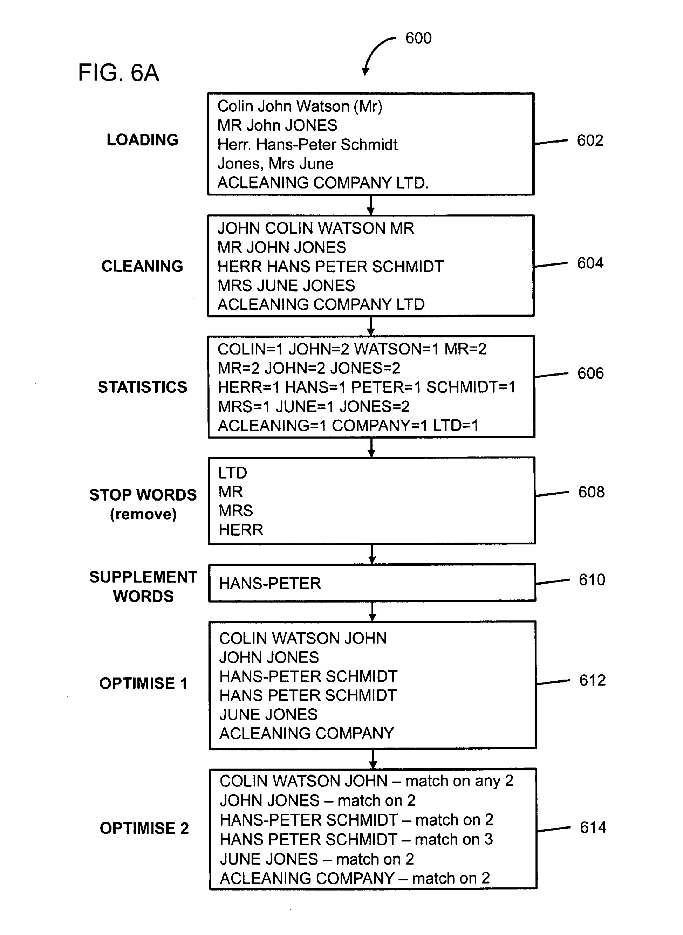

FIGS. 6A-6C illustrate diagrams 600, 620, and 640 of blocks that represent data relating to data subsets of CID indexes during preparation of the CID indexes, in accordance with one or more implementations. For illustrative purposes, with respect to FIGS. 6A-6C, CID types may include type-1, type-2, type-3, and type-4.

Type-1 data may include first names, middle names, last names, company names, or physical addresses (e.g., residential, business, postal, etc.). Type-2 data may include IBANs, other account numbers, pseudonyms, or mnemonics. Type-3 data may include passport identifications, card identifications, social security numbers, email addresses, stock symbols, or user identifiers. Type-4 data may include phone numbers, fax numbers, customer numbers, safe deposit number, or contract number. Additional or alternative types are contemplated.

With respect to FIG. 6A, block 602 represents one or more data subsets of a CID index of type-1 (e.g., names) that has been loaded into a database for preparation for the CID index. Block 604 represents the data subsets after the data subsets are cleaned. Cleaning of the data subsets may include removing stop characters along with formatting of the data subsets.

Block 606 represents one set of statistics that may be specific to type-1 data. As depicted, these statistics designate order numbers for each of the character strings. Block 608 represents stop words that are to be removed from the data subsets. Block 610 represents certain words that are to be added back into the CID index (e.g., as a new data subset) after those words are removed from the data subsets of the CID index.

Block 612 represents the data subsets of the CID index after operations relating to blocks 606, 608, and 610 are applied to the data subsets. For example, reordering of the character strings in each of the data subsets may be performed based on the statistics of block 606. Removal of stop words may be performed for each of the data subsets based on the stop words of block 608. Supplementation of words that were removed may be performed based on the indicated words in block 610.

Block 614 represents the data subsets of the CID index after a threshold relating to a detection of CID is assigned to each of the data subsets. In this case, the detection-related threshold includes a minimum threshold number of matching groups of characters to indicate a detection of CID associated with the client associated with the data subset to which the assignment is made.

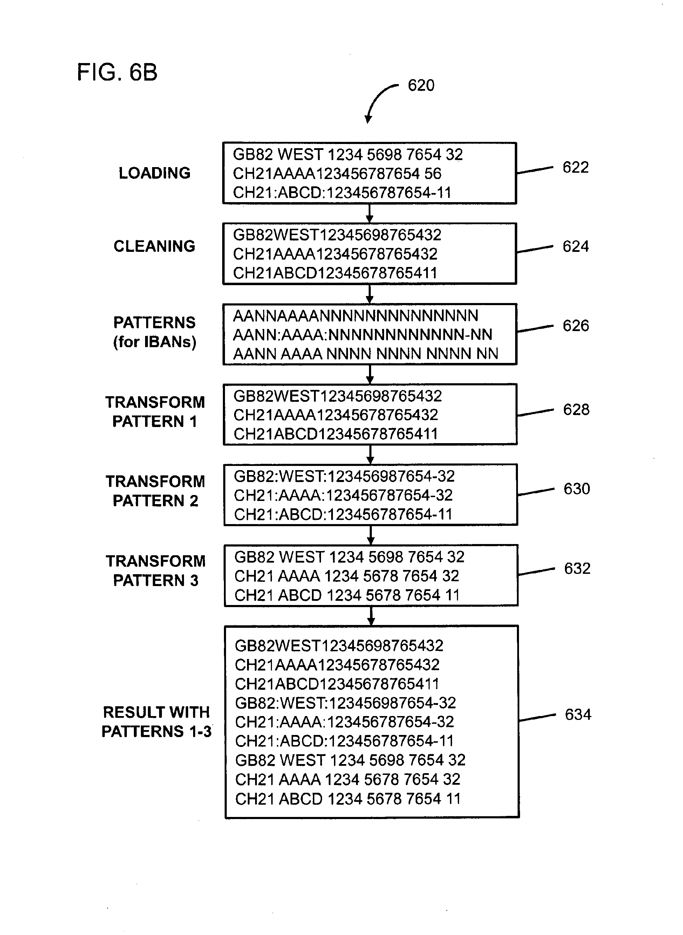

With respect to FIG. 6B, block 622 represents one or more data subsets of a CID index correspond to type-2 (e.g., IBANs) that has been loaded into a database for preparation for the CID index. Block 624 represents the data subsets after the data subsets are cleaned. Cleaning of the data subsets may include removing stop characters along with formatting of the data subsets.

Block 626 represents the patterns that may be retrieved from a pattern repository (e.g., preparation database 114) for the CID index based on the CID index being of type-2. Blocks 628, 630, and 632 respectively represent data subsets generated from the applications of the patterns on the data subsets shown in block 624. Block 634 represents at least a portion of the resulting CID index after the patterns are applied to the CID index.

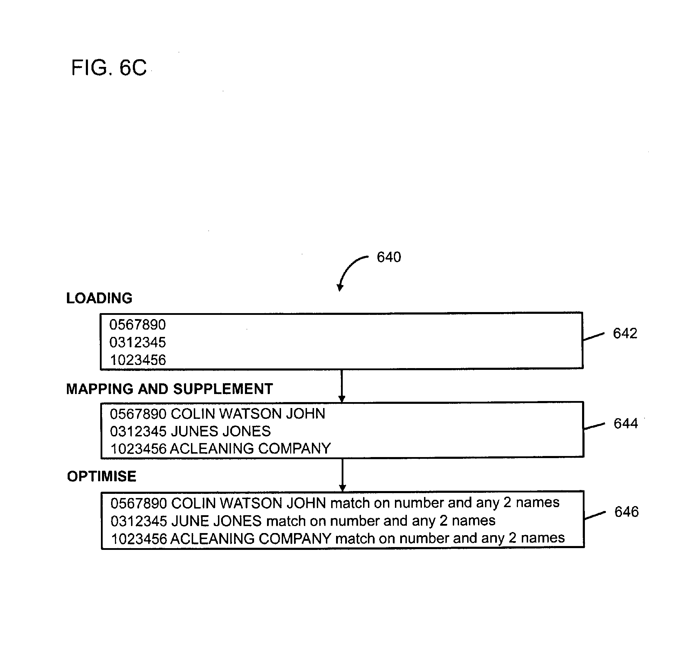

With respect to FIG. 6C, block 642 represents one or more data subsets of a CID index correspond to type-3 (e.g., card identification numbers) that has been loaded into a database for preparation for the CID index. Block 644 represents mapping of each of the data subsets of the type-3 CID index to data subsets of a type-1 CID index and supplementing each of the data subsets of the type-3 CID index with CID (e.g., names) from the data subsets of the type-1 CID index. The mapping may, for instance, be performed based on mapping information retrieved from the preparation database 114. Block 646 represents the data subsets of the CID index after a threshold relating to a detection of CID is assigned to each of the data subsets. In this case, the detection-related threshold includes a minimum threshold number of matching groups of characters to indicate a detection of CID relating to the client associated with the data subset to which the assignment is made.

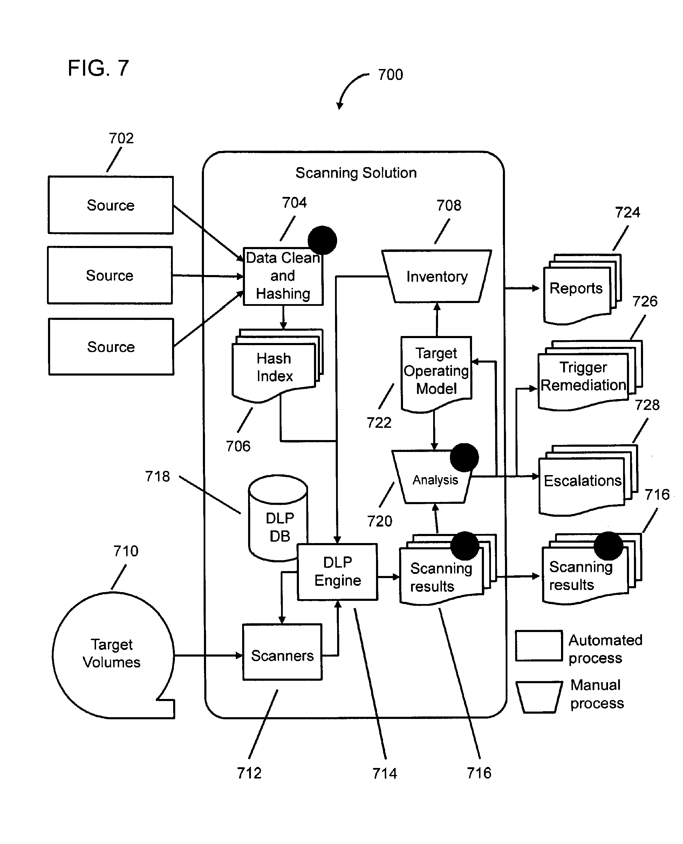

FIG. 7 illustrates a diagram of a scanning system 700 that incorporates preparation of CID indexes, in accordance with one or more implementations. For example, CID sets that are to be prepared and used as indexes for scanning documents or other content items may be provided by one or more sources 702. Data clean and hashing module 704 may incorporate the data preparation platform 102 to facilitate preparation of the CID sets provided by the one or more sources 702 to output one or more hash indexes 706.

Inventory 708 may include a list of group shares. The list of group shares may indicate physical location, owner, or other data relating to the group shares that may be used for prioritizing and targeting the scanning activities. In some implementations, the list of group shares may be manually inputted or modified. Regular updates of target information may be provided to facilitate scheduling with respect to scanning of documents or other content items.

Documents or other content items (e.g., in file formats) may be received from the target group shares (e.g., within target volumes 710) and provided to scanners 712. The scanners 712 and a data leakage prevention (DLP) engine 714 (e.g., using the hash indexes 706) may work in conjunction with one another to detect CID and determine CID-related information. The scanners 712 and the DLP engine 714 may, for instance, utilize an EDM technique or other techniques during the scanning process. Scanning results 716 outputted from the DLP engine 714 may be stored in a DLP database 718 and/or provided for analysis 720. The analysis 720 may produce preliminary results to form/reform a target operating model 722 (e.g., which may be provided as further input to the DLP engine 714, the inventory 708, the analysis 720, etc.). Based on further analysis 720, one or more additional outputs may be provided by the scanning system 700. Those additional outputs may include reports 724 (e.g., pollution reports, performance reports, etc.), remediation triggers 726, escalations triggers 728, or other outputs.

Although the present invention has been described in detail for the purpose of illustration based on what is currently considered to be the most practical and preferred implementations, it is to be understood that such detail is solely for that purpose and that the invention is not limited to the disclosed implementations, but, on the contrary, is intended to cover modifications and equivalent arrangements that are within the spirit and scope of the appended claims. For example, it is to be understood that the present invention contemplates that, to the extent possible, one or more features of any implementation can be combined with one or more features of any other implementation.

## Claims

1. A method for facilitating preparation of client identifying data (CID) indexes, the method being implemented on a computer system that includes one or more processors, the method comprising:
receiving a first CID set of a plurality of CID sets, wherein the first CID set includes first data subsets that are respectively associated with clients;
determining a first CID type of a plurality of CID types that corresponds to the first CID set; and
assigning one or more indicators to each one of the first data subsets based on the first CID type and the respective client associated with the one first data subset, wherein the one or more indicators assigned to the one first data subset indicate (i) a first flag relating to the respective client associated with the one first data subset and (ii) a first threshold relating to a detection of data that corresponds to the respective client associated with the one first data subset.

2. The method of claim 1, wherein the one or more indicators assigned to the one first data subset include a masking code that indicates the first flag.

3. The method of claim 2, wherein the masking code indicates the first flag and the first threshold.

4. The method of one of claims 1-3, wherein the first flag indicates a classification of a plurality of classifications that corresponds to the respective client associated with the one first data subset.

5. The method of claim 4, wherein the plurality of classifications correspond to a plurality of different risk ratings, and the classification corresponds to a risk rating for the respective client associated with the one first data subset.

6. The method of one of claims 1-5, wherein the first threshold includes a minimum threshold number of matching groups of characters to indicate a detection of data associated with the respective client associated with the one first data subset.

7. The method of one of claims 1-6, further comprising:
determining a group of characters in one or more of the first data subsets that includes a character to be removed;
removing the character from the group of characters in the one or more of the first data subsets; and
providing a new first data subset that includes a group of characters such that the group of characters in the new first data subset includes the removed character and represents the group of characters in the one or more of the first data subsets.

8. The method of one of claims 1-7, further comprising reordering, for one or more of the first data subsets, groups of characters in their respective first data subsets based on the first CID type.

9. The method of one of claims 1-8, further comprising:
receiving a second CID set of the plurality of CID sets, wherein the second CID set includes second data subsets that are respectively associated with the clients;
determining a second CID type of the plurality of CID types that corresponds to the second CID set and that is different from the first CID type; and
assigning one or more indicators to each one of the second data subsets based on the second CID type and the respective client associated with the one second data subset, wherein the one or more indicators assigned to the one second data subset indicates (i) a second flag relating to the respective client associated with the one second data subset and (ii) a second threshold relating to a detection of a data that corresponds to the respective client associated with the one second data subset.

10. The method of claim 9, further comprising:
hashing a version of the first CID set that includes the one or more indicators assigned to the first data subsets to generate a first hashed index associated with the first CID set; and
hashing a version of the second CID set that includes the one or more indicators assigned to the second data subsets to generate a second hashed index associated with the second CID set, wherein the second hashed index is different from the first hashed index.

11. The method of one of claims 9 and 10, further comprising:
determining first and second patterns of a plurality of patterns associated with the second CID type, wherein the first pattern is different from the second pattern;
providing a first version of at least one of the second data subsets based on the first pattern; and
providing a second version of the at least one of the second data subsets based on the second pattern.

12. A system for facilitating preparation of client identifying data (CID) indexes, the system including one or more processors executing one or more computer program modules that cause the system to:
receive a first CID set of a plurality of CID sets, wherein the first CID set includes first data subsets that are respectively associated with clients;
determine a first CID type of a plurality of CID types that corresponds to the first CID set; and
assign one or more indicators to each one of the first data subsets based on the first CID type and the respective client associated with the one first data subset, wherein the one or more indicators assigned to the one first data subset indicates (i) a first flag relating to the respective client associated with the one first data subset and (ii) a first threshold relating to a detection of data that corresponds to the respective client associated with the one first data subset.

13. The system of claims 12, wherein the one or more indicators assigned to the one first data subset include a masking code that indicates the first flag.

14. The system of claims 13, wherein the masking code indicates the first flag and the first threshold.

15. The system of one of claims 12-14, wherein the first flag indicates a classification of a plurality of classifications that corresponds to the respective client associated with the one first data subset.'

16. The system of claim 15, wherein the plurality of classifications correspond to a plurality of different risk ratings, and the classification corresponds to a risk rating for the respective client associated with the one first data subset.

17. The system of one of claims 12-16, wherein the first threshold includes a minimum threshold number of matching groups of characters to indicate a detection of data that correspond to the respective client associated with the one first data subset.

18. The system of one of claims 12-17, wherein the system is caused to:
determine a group of characters in one or more of the first data subsets that includes a character to be removed;
remove the character from the group of characters in the one or more of the first data subsets; and
provide a new first data subset that includes a group of characters such that the group of characters in the new first data subset includes the removed character and represents the group of characters in the one or more of the first data subsets.

19. The system of one of claims 12-18, wherein the system is caused to reorder, for one or more of the first data subsets, groups of characters in their respective first data subsets based on the first CID type.

20. The system of one of claims 12-19, wherein the system is caused to:
receive a second CID set of the plurality of CID sets, wherein the second CID set includes second data subsets that are respectively associated with the clients;
determine a second CID type of the plurality of CID types that corresponds to the second CID set and that is different from the first CID type; and
assign one or more indicators to each one of the second data subsets based on the second CID type and the respective client associated with the one second data subset, wherein the one or more indicators assigned to the one second data subset indicates (i) a second flag relating to the respective client associated with the one second data subset and (ii) a second threshold relating to a detection of data that corresponds to the respective client associated with the one second data subset.

21. The system of claim 20, wherein the system is caused to:
hash a version of the first CID set that includes the one or more indicators assigned to the first data subsets to generate a first hashed index associated with the first CID set; and
hash a version of the second CID set that includes the one or more indicators assigned to the second data subsets to generate a second hashed index associated with the second CID set, wherein the second hashed index is different from the first hashed index.

22. The system of one of claims 20 and 21, wherein the system is caused to:
determine first and second patterns of a plurality of patterns associated with the second CID type, wherein the first pattern is different from the second pattern;
provide a first version of at least one of the second data subsets based on the first pattern; and
provide a second version of the at least one of the second data subsets based on the second pattern.

## Amended claims

### Amended claims in accordance with Rule 137(2) EPC.

**1.** A method (300) for facilitating preparation of client identifying data, CID, indexes for detecting presence of CID in content items, the method being implemented on a computer system (100) that includes one or more physical processors (202) programmed to execute one or more computer program instructions which, when executed, perform the method, the method comprising:
receiving (302) a first CID set of a plurality of CID sets, wherein the first CID set includes first data subsets that are respectively associated with clients, and wherein the clients include a first client associated with one of the first data subsets;
determining (304) a first CID type that corresponds to the first CID set;
determining (306), based on the first CID type and the first client, a first classification that corresponds to the first client;
determining (306), based on the first CID type and the first client, a first threshold that is to be used to determine whether CID data corresponding to the first client exists in a content item;
assigning (314), based on the first classification and the first threshold, one or more indicators to at least one of the first data subsets that is associated with the first client, wherein the one or more indicators indicate the first classification and the first threshold.

**2.** The method of claim 1, wherein the one or more indicators include a masking code that indicates the first classification.

**3.** The method of claim 2, wherein the masking code indicates the first classification and the first threshold.

**4.** The method of one of claims 1 to 3, wherein the first classification corresponds to a risk rating for the first client.

**5.** The method of one of claims 1 to 4, wherein the first threshold includes a minimum threshold number of matching groups of characters that is to be used to determine whether CID data corresponding to the first client exists in a content item.

**6.** The method of one of claims 1 to 5, further comprising:
determining (306) a group of characters in one or more of the first data subsets that includes a character to be removed;
removing (308) the character from the group of characters in the one or more of the first data subsets; and
providing (310) a new first data subset that includes a group of characters such that the group of characters in the new first data subset includes the removed character and represents the group of characters in the one or more of the first data subsets.

**7.** The method of one of claims 1 to 6, further comprising reordering (312), for one or more of the first data subsets, groups of characters in their respective first data subsets based on the first CID type.

**8.** The method of one of claims 1 to 7, further comprising:
receiving (322) a second CID set of the plurality of CID sets, wherein the second CID set includes second data subsets that are respectively associated with the clients;
determining (324) a second CID type of the plurality of CID types that corresponds to the second CID set and that is different from the first CID type;
determining (326), based on the second CID type and the first client, a second classification that corresponds to the first client;
determining (326), based on the second CID type and the first client, a second threshold that is to be used to determine whether CID data corresponding to the first client exists in a content item; and
assigning (332), based on the second classification and the second threshold, one or more second indicators to at least one of the second data subsets that is associated with the first client, wherein the one or more second indicators indicate the second classification and the second threshold.

**9.** The method of claim 8, further comprising:
hashing (316) a version of the first CID set that includes the one or more indicators to generate a first hashed index associated with the first CID set; and
hashing (334) a version of the second CID set that includes the one or more second indicators to generate a second hashed index associated with the second CID set, wherein the second hashed index is different from the first hashed index.

**10.** The method of one of claims 8 and 9, further comprising:
determining (326) first and second patterns of a plurality of patterns associated with the second CID type, wherein the first pattern is different from the second pattern;
providing (328) a first version of the at least one of the second data subsets based on the first pattern; and
providing (330) a second version of the at least one of the second data subsets based on the second pattern.

**11.** A system (100) for facilitating preparation of client identifying data, CID, indexes for detecting presence of CID in content items, the system comprising:
one or more physical processors (202) programmed with one or more computer program instructions that, when executed, cause the system to:
- receive a first CID set of a plurality of CID sets, wherein the first CID set includes first data subsets that are respectively associated with clients, and wherein the clients include a first client associated with one of the first data subsets;
- determine a first CID type that corresponds to the first CID set;
- determine, based on the first CID type and the first client, a first classification that corresponds to the first client;
- determine, based on the first CID type and the first client, a first threshold that is to be used to determine whether CID data corresponding to the first client exists in a content item
- assign, based on the first classification and the first threshold, one or more indicators to at least one of the first data subsets that is associated with the first client, wherein the one or more indicators indicate the first classification and the first threshold.

**12.** The system of claims 11, wherein the one or more indicators include a masking code that indicates the first classification.

**13.** The system of claims 12, wherein the masking code indicates the first classification and the first threshold.

**14.** The system of one of claims 11 to 13, wherein the first classification corresponds to a risk rating for the first client.

**15.** The system of one of claims 11 to 14, wherein the first threshold includes a minimum threshold number of matching groups of characters that is to be used to determine whether CID data corresponding to the first client exists in a content item.

**16.** The system of one of claims 11 to 15, wherein the system is caused to:
determine a group of characters in one or more of the first data subsets that includes a character to be removed;
remove the character from the group of characters in the one or more of the first data subsets; and
provide a new first data subset that includes a group of characters such that the group of characters in the new first data subset includes the removed character and represents the group of characters in the one or more of the first data subsets.

**17.** The system of one of claims 11 to 16, wherein the system is caused to reorder, for one or more of the first data subsets, groups of characters in their respective first data subsets based on the first CID type.

**18.** The system of one of claims 11 to 17, wherein the system is caused to:
receive a second CID set of the plurality of CID sets, wherein the second CID set includes second data subsets that are respectively associated with the clients;
determine a second CID type of the plurality of CID types that corresponds to the second CID set and that is different from the first CID type;
determine, based on the second CID type and the first client, a second classification that corresponds to the first client;
determine, based on the second CID type and the first client, a second threshold that is to be used to determine whether CID data corresponding to the first client exists in a content item;
assign, based on the second classification and the second threshold, one or more second indicators to at least one of the second data subsets that is associated with the first client, wherein the one or more second indicators indicate the second classification and the second threshold.

**19.** The system of claim 18, wherein the system is caused to:
hash a version of the first CID set that includes the one or more indicators to generate a first hashed index associated with the first CID set; and
hash a version of the second CID set that includes the one or more second indicators to generate a second hashed index associated with the second CID set, wherein the second hashed index is different from the first hashed index.

**20.** The system of one of claims 18 and 19, wherein the system is caused to:
determine first and second patterns of a plurality of patterns associated with the second CID type, wherein the first pattern is different from the second pattern;
provide a first version of the at least one of the second data subsets based on the first pattern; and
provide a second version of the at least one of the second data subsets based on the second pattern.
